# EUROPÄISCHE PATENTSCHRIFT

(11) **EP 1 299 652 B1**
(45) Veröffentlichungstag und Bekanntmachung des Hinweises auf die Patenterteilung: **06.04.2005**
(21) Anmeldenummer: 01960405.7
(22) Anmeldetag: 27.06.2001
(51) Int. Cl.: F16B 35/06, B60B 3/16

(54) **VERBINDUNGSELEMENT**
CONNECTING ELEMENT
ELEMENT DE RACCORDEMENT

(30) Priorität: 13.07.2000 DE 20012107 U
(43) Veröffentlichungstag der Anmeldung: 09.04.2003
(73) Patentinhaber: Altenloh, Brinck & Co. GmbH & Co. KG, D-58256 Ennepetal (DE)
(72) Erfinder: HOFSCHNEIDER, Manfred, 42349 Wuppertal (DE)
(74) Vertreter: Patentanwälte Dr. Solf & Zapf
(86) Internationale Anmeldenummer: PCT/EP2001/007338
(87) Internationale Veröffentlichungsnummer: WO 2002/006685

(56) Entgegenhaltungen:
- DE-A- 3 027 191
- US-A- 4 717 299
- US-A- 5 405 227

## Beschreibung

Die vorliegende Erfindung betrifft eine Befestigungsanordnung, bestehend aus einem Bauteil und einem Schraubenelement mit einem Kraftangriff für ein Drehwerkzeug, wobei sich das Bauteil und das Schraubenelement im befestigten Zustand über Anlageflächen miteinander in Anlage befinden und wobei die Anlagefläche des Schraubenelementes auf seiner dem Bauteil zugewandten Seite als eine konvex gekrümmte Außenfläche und die Anlagefläche des Bauteils als eine konkav gekrümmte Innenfläche ausgebildet ist, wobei die Außenfläche und die Innenfläche koaxial zu einer gemeinsamen, durch das Bauteil und das Element verlaufenden Längsachse angeordnet sind, wobei femer die Anlageflächen im Axialschnitt der Befestigungsanordnung durch derartig gekrümmte Bogenabschnitte beschrieben sind, daß der (die) Krümmungsmittelpunkt(e) der konvex gekrümmten Außenfläche in einer senkrecht zur Längsachse verlaufenden Richtung von dem (den) Krümmungsmittelpunkt(en) der konkav gekrümmten Innenfläche beabstandet ist (sind).

Die Erfindung betrifft ebenfalls ein Schraubenelement mit einem Kraftangriff für ein Drehwerkzeug und einer in Einschraubrichtung des Schraubenelements weisenden, als konvex gekrümmte Außenfläche ausgeführten Anlagefläche zur Anlage an einer konkav gekrümmten Innenfläche eines Bauteils, wobei die Außenfläche des Schraubenelementes und die Innenfläche des Bauteils koaxial zu einer gemeinsamen, durch das Bauteil und das Schraubenetement verlaufenden Längsachse angeordnet sind, wobei die Anlagefläche im Axialschnitt des Schraubenelementes durch gekrümmte Bogenabschnitte beschrieben ist, deren Krümmungsmittelpunkte von der Längsachse beabstandet sind.

Derartige Befestigungsanordnungen bzw. Schraubenelemente werden beispielsweise für die Befestigung von Autorädem bzw. Felgen mittels Radschrauben an einem Kraftfahrzeug eingesetzt.

Bei bekannten Verbindungsmitteln ist von Nachteil, daß die Außenfläche des Schraubenelementes und/oder die Innenfläche des Bauteils bei wiederholtem Einschrauben des Schraubenelementes oftmals verformt und beschädigt werden, da die Anlage der Außenfläche des Schraubenelementes je nach Dimensionierung des Schraubenelementes und des Bauteils entweder im Bereich des in Einschraubrichtung vorderen oder hinteren Randes der konkav gekrümmten Innenfläche des Bauteils erfolgt. Derartige Verformungen führen bei der Montage zu erheblichen Problemen bei der Einstellung eines definierten Drehmoments. Zusätzlich ergeben sich in den vorstehenden Toleranzendlagen extrem unterschiedliche Tragbilder, nämlich sogenannte Außenträger oder innenträger und damit stark unterschiedliche Reibmomente in der Kopfauflage.

Eine Befestigungsanordnung und ein Schraubenelement der eingangs beschriebenen Art ist aus der US-A-4 717 299 bekannt. Bekanntermaßen ist dabei. zunächst ein Anfangskontakt nur am äußeren Umfang in der konkav gekrümmten Fläche gegeben ist und anschließend erfolgt eine derartige elastische Verformung der Fläche des Ringes, dass ein vollflächiger Kontakt zwischen den beiden Teilen erreicht wird. Ein derartig vollflächiger Anlagekontakt kann bei einem wiederholten Lösen auf Grund der eingetretenen plastischen Verformung der Anlageflächen dazu führen, dass ein Anlagekontakt im Außen- oder im Innenbereich der Umfangsflächen zustande kommt.

Der vorliegenden Erfindung liegt die Aufgabe zugrunde, eine Befestigungsanordnung bzw. ein Schraubenelement der gattungsgemäßen Art zu schaffen, bei der oder dem die Anlageflächen auch bei mehrmaligem Lösen und Befestigen der Befestigungsanordnung bzw. des Schraubenelements möglichst wenig, verformt oder beschädigt werden und zusätzlich sollen die extremen Außen- und Innenträger vermieden werden.

Erfindungsgemäß wird dies durch Schaffung einer Befestigungseinrichtung erreicht, bei der der (die) Krümmungsmittelpunkt(e) der konvex gekrümmten Außenfläche zu dem (den) Krümmungsmittelpunkt(en) der konkav gekrümmten Innenfläche derart beabstandet sind, dass eine Anlage ihrer Anlageflächen im in Einschraubrichtung mittleren Bereich der Außenfläche und der Innenfläche gegeben ist, wobei die Randbereiche der Außenfläche und der Innenfläche keine oder nur eine geringe Belastung erfahren.

Außerdem wird die Aufgabe durch ein erfindungsgemäßes Schraubenetement gelöst, bei dem die Krümmungsmittelpunkte der konvex gekrümmten Außenfläche zu dem (den) Krümmungsmittelpunkt(en) der konkav gekrümmten Innenfläche derart beabstandet sind, dass eine Anlage ihrer Anlageflächen im in Einschraubrichtung mittleren Bereich der Außenfläche und der Innenfläche gegeben ist, wobei die Randbereiche der Außenfläche und der Innenfläche keine oder nur eine geringe Belastung erfahren.

Den erfindungsgemäßen Lösungen liegt die Erkenntnis zugrunde, daß die ungünstigen Andruckverhättnisse im Bereich des in Einschraubrichtung vorderen oder hinteren Randes der konkav gekrümmten Innenfläche des Bauteils dadurch verursacht werden, daß die der Krümmung der Außenfläche und der Krümmung der Innenfläche jeweils zugehörigen Krümmungsmittelpunkte in einer senkrecht zur Längsachse verlaufenden Richtung nicht beabstandet sind. Dadurch erfolgt die Anlage der Außen- an der Innenfläche entweder im in Einschraubrichtung vorderen oder hinteren Randbereich der Innenfläche.

Aufgrund dieser ungünstigen Kräfteverhältnisse können sich Verformungen und Beschädigungen der Außen- und Innenflächen ergeben, die zu einer Beeinträchtigung der Befestigung, beispielsweise mit einem definierten Drehmoment, führen.

Bei einer erfindungsgemäßen Befestigungsanordnung ist durch die Beabstandung der Krümmungsmittelpunkte in senkrecht zur Längsachse verlaufender Richtung eine Anlage im in Einschraubrichtung mittleren Bereich der Außen- und Innenflächen gegeben, die für die Verformung relativ anfälligen Randbereiche erfahren dagegen keine oder nur eine geringere Belastung. Die Befestigungsanordnung bzw. das Schraubelement erlauben deshalb auch bei mehrmaligem Gebrauch eine Befestigung mit einem definierten Drehmoment. Erfindungsgemäß wird das Tragbild derart eingeschränkt, daß sich der für das Reibmoment maßgebliche Durchmesser nur in geringen Toleranzen verändert, so daß sich letztlich geringe Schwankungen bei den gewünschten Verspannkräften einstellen.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll im folgenden die Erfindung genauer erläutert werden. Es zeigen:
- Fig. 1: eine Ausführungsform der erfindungsgemäße Befestigungsanordnung im Axialschnitt
- Fig. 2: eine zweite Ausführungsform der erfindungsgemäße Befestigungsanordnung im Axialschnitt

In den verschiedenen Figuren der Zeichnungen sind gleiche Teile stets mit den selben Bezugszeichen versehen.

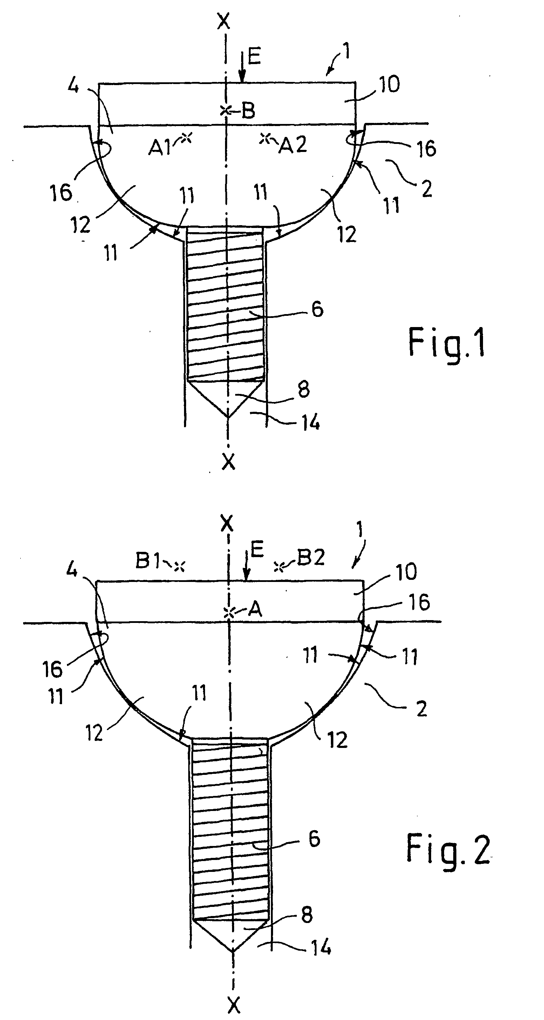

Die Fig. 1 und 2 zeigen im Axialschnitt durch eine Längsachse X-X ein erfindungsgemäßes Schraubenelement 1, beispielhaft eine Schraube, das in Einschraubrichtung E in ein Bauteil 2 einschraubbar ist. Das Schraubenelement 1 weist einen Schraubenkopf 4 und einen sich daran anschließenden Gewindeschaft 6 mit einer an seinem freien Ende angeordneten Schraubenspitze 8 auf. Der Schraubenkopf 4 besteht aus einem Kraftangriff 10 und einer dem Bauteil 2 zugewandten Anlagefläche 11, die als um mindestens einen Krümmungsmittelpunkt A konvex gekrümmte Außenfläche 12 ausgebildet ist. Der Kraftangriff 10 kann beispielsweise als Sechskant, Innensechskant, Schlitz, Kreuzschlitz oder dergleichen ausgelegt sein. Das Bauteil 2 weist eine Öffnung 14 zur Aufnahme des Gewindeschaftes 6 und eine Anlagefläche 11 zur Aufnahme der konvex gekrümmten Außenfläche 12 auf. Die Anlagefläche 11 ist als um mindestens einen Krümmungsmittelpunkt B konkav gekrümmte Innenfläche 16 ausgebildet. Die konvex gekrümmte Außenfläche 12 und die konkav gekrümmte innenfläche 16 sind koaxial zu einer Längsachse X-X angeordnet.

In der in Fig. 1 im Axialschnitt dargestellten Ausführungsform ist die Außenfläche 12 der Schraube derart konvex gekrümmt, daß ihre Krümmungsmittelpunkte A1, A2 im Gegensatz zum Krümmungsmittelpunkt B der Innenfläche 16 nicht auf der Längsachse X-X angeordnet sind. Daraus ergibt sich, daß die Anlage nicht am in Einschraubrichtung vorderen oder hinteren Randbereich bzw. an den Enden der konkaven bzw. konvexen Bogenabschnitte, sondern im mittleren Bereich der Innenfläche 16 auftritt.

In Fig. 2 ist eine zweite erfindungsgemäße Ausführungsform im Axialschnitt dargestellt, bei der die Innenfläche 16 des Bauteils 2 derart konkav gekrümmt ist, daß deren Krümmungsmittelpunkte . B1, B2 im Gegensatz zum Krümmungsmittelpunkt A der Außenfläche 12 nicht auf der Längsachse X-X angeordnet ist. Auch diese Anordnung gewährleistet, daß die Anlage nicht in den Randbereichen der Innenfläche 16 Randbereich bzw. an den Enden der konkaven bzw. konvexen Bogenabschnitte auftritt.

Die Erfindung ist nicht auf die dargestellten und beschriebenen Ausführungsbeispiele beschränkt, sondern umfaßt auch alle im Sinne der Erfindung gleichwirkenden Ausführungen, beispielsweise kann als Schraubenelement auch eine Mutter dienen, die auf einen Gewindeschaft 6 aufgeschraubt wird, der in einer konkav gekrümmten Innenfläche 16 angeordnet ist. Auch ist eine Kombination der in den Fig. 1 und 2 dargestellten Ausführungsformen denkbar, bei der sowohl die Bogenabschnitte der konkav gekrümmten Innenfläche 16, als auch die Bogenabschnitte der Außenfläche 12 im Axialschnitt jeweils um zwei Mittelpunkte A1, A2; B1, B2 gekrümmt sind. Weiterhin können die Bogenabschnitte nicht nur durch Kreisabschnitte sondern beispielsweise auch durch Ellipsenabschnitte beschrieben sein.

## Patentansprüche

1. Befestigungsanordnung, bestehend aus einem Bauteil (2) und einem Schraubenelement (1) mit einem Kraftangriff (10) für ein Drehwerkzeug, wobei sich das Bauteil (2) und das Schraubenetement (1) im befestigten Zustand über Anlageflächen miteinander in Anlage befinden und wobei die Anlagefläche (11) des Schraubenelementes (1) auf seiner dem Bauteil (2) zugewandten Seite als eine konvex gekrümmte Außenfläche (12) und die Anlagefläche (11) des Bauteils (2) als eine konkav gekrümmte Innenfläche (16) ausgebildet ist, wobei die Außenfläche (12) und die Innenfläche (16) koaxial zu einer gemeinsamen, durch das Bauteil (2) und das Element (1) verlaufenden Längsachse (X-X) angeordnet sind, wobei femer die Anlageflächen. (11) im Axialschnitt der Befestigungsanordnung durch derartig gekrümmte Bogenabschnitte beschrieben sind, daß der (die) Krümmungsmittelpunkt(e) (A, A1, A2) der konvex gekrümmten Außenfläche (12) in einer senkrecht zur Längsachse (X-X) verlaufenden Richtung von dem (den) Krümmungsmittelpunkt(en) (B, B1, B2) der konkav gekrümmten Innenfläche beabstandet ist (sind),
**dadurch gekennzeichnet dass**, der (die) Krümmungsmittelpunkt(e) (A, A1, A2) der konvex gekrümmten Außenfläche (12) zu dem (den) Krümmungsmittetpunkt(en) (B, B1, B2) der konkav gekrümmten Innenfläche (16) derart beabstandet sind, dass eine Anlage ihrer Anlageflächen (11) im in Einschraubrichtung mittleren Bereich der Außenfläche (12) und der Innenfläche (16) gegeben ist, wobei die Randbereiche der Außenfläche (12) und der Innenfläche (16) keine oder nur eine geringe Belastung erfahren.

2. Befestigungsanordnung nach Anspruch 1,
**dadurch gekennzeichnet, daß** das Schraubenelement (1) als Schraube, bestehend aus einem Schraubenkopf (4) und einem sich daran anschließenden Gewindeschaft (6) mit einer freien Schraubenspitze (8) ausgebildet ist, wobei die konvex gekrümmte Außenfläche (12) auf der dem Gewindeschaft (6) zugewandten Seite des Schraubenkopfs (4) angeordnet ist.

3. Befestigungsanordnung nach Anspruch 1,
**dadurch gekennzeichnet; daß** das Schraubenelement (1) als Schraubenmutter ausgeführt ist und die konkav gekrümmte Innenfläche (16) mit einem sich in Richtung der Schraubenmutter erstreckenden Gewindeschaft (6) an dem Bauteil (2) angeordnet ist.

4. Befestigungsanordnung nach einem der Ansprüche 1 bis 3,
**dadurch gekennzeichnet, daß** die die Anlageflächen (11) im Axialschnitt beschreibenden Bogenabschnitte als Kreisabschnitte ausgeführt sind.

5. Befestigungsanordnung nach Anspruch 4,
**dadurch gekennzeichnet**, d a ß die Kreisabschnitte der konkav gekrümmten Innenfläche (16) einen gemeinsamen Krümmungsmittelpunkt (B) und die Kreisabschnitte der konvex gekrümmten Außenfläche (12) in der senkrecht zur Längsachse (X-X) verlaufenden Richtung voneinander beabstandete Krümmungsmittelpunkte (A1, A2) aufweisen, wobei der den Kreisabschnitten der konkav gekrümmten Innenfläche (16) zugehörige Radius länger als die den Kreisabschnitten der konvex gekrümmten Außenfläche (12) zugehörigen Radien ist.

6. Befestigungsanordnung nach Anspruch 4,
**dadurch gekennzeichnet, daß** die Kreisabschnitte der konvex gekrümmten Außenfläche (12) einen gemeinsamen Krümmungsmittelpunkt (A) und die Kreisabschnitte der konkav gekrümmten Innenfläche (16) in der senkrecht zur Längsachse (X-X) verlaufenden Richtung voneinander beabstandete Krümmungsmittelpunkte (B1, B2) aufweisen, wobei der den Kreisabschnitten der konvex gekrümmten Außenfläche (12) zugehörige Radius kürzer als die den Kreisabschnitten der konkav gekrümmten Innenfläche (16) zugehörigen Radien ist.

7. Befestigungsanordnung nach Anspruch 4,
**dadurch gekennzeichnet, daß** daß die Kreisabschnitte der konkav gekrümmten Innenfläche (16) und die Kreisabschnitte der konvex gekrümmten Außenfläche (12) jeweils in der senkrecht zur Längsachse (X-X) verlaufenden Richtung voneinander beabstandete Krümmungsmittelpunkte (A1, A2; B1, B2) aufweisen, wobei die Krümmungsmittelpunkt (A1, A2, B1, 82) in der senkrecht zur Längsachse (X-X) verlaufenden Richtung voneinander beabstandet sind und die den Kreisabschnitten der Innenfläche (16) zugehörige Radien länger als die den Kreisabschnitten der Außenfläche (12) zugehörigen Radien sind.

8. Befestigungsanordnung nach einem der Ansprüche 1 bis 3,
**dadurch gekennzeichnet, daß** daß die die Anlageflächen (11) beschreibenden Bogenabschnitte als Ellipsenabschnitte ausgeführt sind.

9. Schraubenelement (1) mit einem Kraftangriff (10) für ein Drehwerkzeug und einer in Einschraubrichtung (E) des Schraubenelements weisenden, als konvex gekrümmte Außenfläche ausgeführten Anlagefläche (11) zur Anlage an einer konkav gekrümmten Innenfläche (16) eines Bauteils, wobei die Außenfläche des Schraubenelementes (1) und die Innenfläche (16) des Bauteils (2) koaxial zu einer gemeinsamen, durch das Bauteil (2) und das Schraubenelement (1) verlaufenden Längsachse (X-X) angeordnet sind, wobei die Anlagefläche (11) im Axialschnitt des Schraubenelementes (1) durch gekrümmte Bogenabschnitte beschrieben ist, deren Krümmungsmittelpunkte (A1, A2) von der Längsachse beabstandet sind,
**dadurch gekennzeichnet, dass** die Krümmungsmittelpunkte (A1, A2) der konvex gekrümmten Außenfläche (12) zu dem (den) Krümmungsmittelpunkt(en) (B, B1, B2) der konkav gekrümmten Innenfläche (16) derart beabstandet sind, dass eine Anlage ihrer Anlageflächen (11) im in Einschraubrichtung mittleren Bereich der Außenfläche (12) und der Innenfläche (16) gegeben ist, wobei die Randbereiche der Außenfläche (12) und der Innenfläche (16) keine oder nur eine geringe Belastung erfahren.

10. Schraubenelement nach Anspruch 9,
**gekennzeichnet durch** eine Ausführung als Schraube, bestehend aus einem Schraubenkopf (4) und einem sich daran anschließenden Gewindeschaft (6) mit einer freien Schraubenspitze (8), wobei die konvex gekrümmte Außenfläche (12) auf der dem Gewindeschaft (6) zugewandten Seite des Schraubenkopfs (4) angeordnet ist.

11. Schraubenelement nach Anspruch 9,
**gekennzeichnet durch** eine Ausführung als Schraubenmutter.

12. Schraubenelement nach einem der Ansprüche 9 bis 11,
**dadurch gekennzeichnet, daß** die die Anlageflächen (11) beschreibenden Bogenabschnitte der konvex gekrümmte Außenfläche (12) und der konkav gekrümmte Innenfläche (16) des Bauteils (2) als Kreisabschnitte ausgeführt sind.

13. Schraubenelement nach Anspruch 12,
**dadurch gekennzeichnet, daß** die Kreisabschnitte der konkav gekrümmten Innenfläche (16) einen gemeinsamen Krümmungsmittelpunkt (B) und die Kreisabschnitte der konvex gekrümmten Außenfläche (12) in der senkrecht zur Längsachse (X-X) verlaufenden Richtung voneinander beabstandete Krümmungsmittelpunkte (A1, A2) aufweisen, wobei der den Kreisabschnitten der konkav gekrümmten Innenfläche (16) zugehörige Radius länger als die den Kreisabschnitten der konvex gekrümmten Außenfläche (12) zugehörigen Radien ist.

14. Schraubenelement nach Anspruch 12,
**dadurch gekennzeichnet , daß** die Kreisabschnitte der konvex gekrümmten Außenfläche (12) einen gemeinsamen Krümmungsmittelpunkt (A) und die Kreisabschnitte der konkav gekrümmten Innenfläche (16) in der senkrecht zur Längsachse (X-X) verlaufenden Richtung voneinander beabstandete Krümmungsmittelpunkte (B1, B2) aufweisen, wobei der den Kreisabschnitten der konvex gekrümmten Außenfläche (12) zugehörige Radius kürzer als die den Kreisabschnitten der konkav gekrümmten Innenfläche (16) zugehörigen Radien ist.

15. Schraubenelement nach Anspruch 12,
**dadurch gekennzeichnet, daß** daß die Kreisabschnitte der konkav gekrümmten Innenfläche (16) und die Kreisabschnitte der konvex gekrümmten Außenfläche (12) jeweils in der senkrecht zur Längsachse (X-X) verlaufenden Richtung voneinander beabstandete Krümmungsmittelpunkte (A1, A2; B1, B2) aufweisen, wobei die Krümmungsmittelpunkt (A1, A2, B1, B2) in der senkrecht zur Längsachse (X-X) verlaufenden Richtung voneinander beabstandet sind und die den Kreisabschnitten der Innenfläche (16) zugehörige Radien länger als die den Kreisabschnitten der Außenfläche (12) zugehörigen Radien sind.

16. Schraubenelement nach einem der Ansprüche 9 bis 11,
**dadurch gekennzeichnet, daß** die die Anlageflächen (11) beschreibenden Bogenabschnitte der konvex gekrümmte Außenfläche (12) und der konkav gekrümmte Innenfläche (16) des Bauteils (2) als Ellipsenabschnitte ausgeführt sind.

17. Schraubenelement nach einem der vorhergehenden Ansprüche, insbesondere nach Anspruch 11,
**gekennzeichnet durch** eine Ausführung als eine auf einen Gewindeschaft (6) aufschraubbare Mutter, wobei der Gewindeschaft (6) in der konkav gekrümmten Innenfläche (16) angeordnet ist.

## Claims

1. Fastening arrangement, consisting of a component (2) and a screw element (1) with a force application location (10) for a turning tool, the component (2) and the screw element (1) being in contact with one another via bearing surfaces in the fastened state, and the bearing surface (11) of the screw element (1) being designed on its side facing the component (2) as a convexly curved outer surface (12) and the bearing surface (11) of the component (2) being designed as a concavely curved inner surface (16), the outer surface (12) and the inner surface (16) being arranged coaxially with a common longitudinal axis (X-X) running through the component (2) and the element (1), and the bearing surfaces (11) being described in an axial section of the fastening arrangement by arc portions which are curved in such a way that the centre (s) of curvature (A, A1, A2) of the convexly curved outer surface (12) is (are) spaced from the centre(s) of curvature (B, B1, B2) of the concavely curved inner surface in a direction running perpendicularly to the longitudinal axis (X-X), **characterized in that** the centre(s) of curvature (A, A1, A2) of the convexly curved outer surface (12) is (are) spaced from the centre (s) of curvature (B, B1, B2) of the concavely curved inner surface (16) in such a way that contact of their bearing surfaces (11) is brought about in the central region, in the screwing-in direction, of the outer surface (12) and of the inner surface (16), the edge regions of the outer surface (12) and of the inner surface (16) undergoing no or only slight loading.

2. Fastening arrangement according to Claim 1, **characterized in that** the screw element (1) is designed as a screw, consisting of a screw head (4) and an adjoining threaded shank (6) with a free screw tip (8), the convexly curved outer surface (12) being arranged on that side of the screw head (4) facing the threaded shank (6).

3. Fastening arrangement according to Claim 1, **characterized in that** the screw element (1) is embodied as a screw nut and the concavely curved inner surface (16), with a threaded shank (6) extending in the direction of the screw nut, is arranged on the component (2).

4. Fastening arrangement according to one of Claims 1 to 3, **characterized in that** the arc portions which describe the bearing surfaces (11) in an axial section are circular portions.

5. Fastening arrangement according to Claim 4, **characterized in that** the circular portions of the concavely curved inner surface (16) have a common centre of curvature (B) and the circular portions of the convexly curved outer surface (12) have centres of curvature (A1, A2) spaced from one another in the direction running perpendicularly to the longitudinal axis (X-X), the radius belonging to the circular portions of the concavely curved inner surface (16) being longer than the radii belonging to the circular portions of the convexly curved outer surface (12).

6. Fastening arrangement according to Claim 4, **characterized in that** the circular portions of the convexly curved outer surface (12) have a common centre of curvature (A) and the circular portions of the concavely curved inner surface (16) have centres of curvature (B1, B2) spaced from one another in the direction running perpendicularly to the longitudinal axis (X-X), the radius belonging to the circular portions of the convexly curved outer surface (12) being shorter than the radii belonging to the circular portions of the concavely curved inner surface (16).

7. Fastening arrangement according to Claim 4, **characterized in that** the circular portions of the concavely curved inner surface (16) and the circular portions of the convexly curved outer surface (12) in each case have centres of curvature (A1, A2; B1, B2) spaced from one another in the direction running perpendicularly to the longitudinal axis (X-X), the centres of curvature (A1, A2, B1, B2) being spaced from one another in the direction running perpendicularly to the longitudinal axis (X-X) and the radii belonging to the circular portions of the inner surface (16) being longer than the radii belonging to the circular portions of the outer surface (12).

8. Fastening arrangement according to one of Claims 1 to 3, **characterized in that** the arc portions which describe the bearing surfaces (11) are elliptical portions.

9. Screw element (1) with a force application location (10) for a turning tool and with a bearing surface (11), which faces in the screwing-in direction (E) of the screw element and is embodied as a convexly curved outer surface, for contact with a concavely curved inner surface (16) of a component, the outer surface of the screw element (1) and the inner surface (16) of the component (2) being arranged coaxially with a common longitudinal axis (X-X) running through the component (2) and the screw element (1), the bearing surface (11) being described in an axial section of the screw element (1) by curved arc portions, the centres of curvature (A1, A2) of which are spaced from the longitudinal axis, **characterized in that** the centres of curvature (A1, A2) of the convexly curved outer surface (12) are spaced from the centre(s) of curvature (B, B1, B2) of the concavely curved inner surface (16) in such a way that contact of their bearing surfaces (11) is brought about in the central region, in the screwing-in direction, of the outer surface (12) and of the inner surface (16), the edge regions of the outer surface (12) and of the inner surface (16) undergoing no or only slight loading.

10. Screw element according to Claim 9, **characterized by** embodiment as a screw, consisting of a screw head (4) and an adjoining threaded shank (6) with a free screw tip (8), the convexly curved outer surface (12) being arranged on that side of the screw head (4) facing the threaded shank (6).

11. Screw element according to Claim 9, **characterized by** embodiment as a screw nut.

12. Screw element according to one of Claims 9 to 11, **characterized in that** the arc portions of the convexly curved outer surface (12) and of the concavely curved inner surface (16) of the component (2) which describe the bearing surfaces (11) are circular portions.

13. Screw element according to Claim 12, **characterized in that** the circular portions of the concavely curved inner surface (16) have a common centre of curvature (B) and the circular portions of the convexly curved outer surface (12) have centres of curvature (A1, A2) spaced from one another in the direction running perpendicularly to the longitudinal axis (X-X), the radius belonging to the circular portions of the concavely curved inner surface (16) being longer than the radii belonging to the circular portions of the convexly curved outer surface (12).

14. Screw element according to Claim 12, **characterized in that** the circular portions of the convexly curved outer surface (12) have a common centre of curvature (A) and the circular portions of the concavely curved inner surface (16) have centres of curvature (B1, B2) spaced from one another in the direction running perpendicularly to the longitudinal axis (X-X), the radius belonging to the circular portions of the convexly curved outer surface (12) being shorter than the radii belonging to the circular portions of the concavely curved inner surface (16).

15. Screw element according to Claim 12, **characterized in that** the circular portions of the concavely curved inner surface (16) and the circular portions of the convexly curved outer surface (12) in each case have centres of curvature (A1, A2; B1, B2) spaced from one another in the direction running perpendicularly to the longitudinal axis (X-X), the centres of curvature (A1, A2, B1, B2) being spaced from one another in the direction running perpendicularly to the longitudinal axis (X-X) and the radii belonging to the circular portions of the inner surface (16) being longer than the radii belonging to the circular portions of the outer surface (12).

16. Screw element according to one of Claims 9 to 11, **characterized in that** the arc portions of the convexly curved outer surface (12) and of the concavely curved inner surface (16) of the component (2) which describe the bearing surfaces (11) are elliptical portions.

17. Screw element according to one of the preceding claims, in particular according to Claim 11, **characterized by** embodiment as a nut which can be screwed onto a threaded shank (6), the threaded shank (6) being arranged in the concavely curved inner surface (16).

## Revendications

1. Dispositif de fixation composé d'une pièce (2) et d'un élément de vissage (1) muni d'une prise d'application de force (10) pour un outil de rotation, la pièce (2) et l'élément de vissage (1) se trouvant en contact entre eux par des surfaces de contact dans l'état fixé et la surface de contact (11) de l'élément de vissage (1) étant réalisée, sur son côté dirigé vers la pièce (2) sous la forme d'une surface extérieure (12) incurvée avec une forme convexe et la surface de contact (11) de la pièce (2) étant réalisée sous la forme d'une surface intérieure (16) incurvée avec une forme concave, la surface extérieure (12) incurvée avec une forme convexe et la surface intérieure (16) incurvée avec une forme concave étant disposées coaxialement à un axe longitudinal (X-X) commun s'étendant à travers la pièce (2) et l'élément (1), cependant qu'en supplément les surfaces de contact (11) sont décrites, dans une coupe axiale du dispositif de fixation, par des segments d'arcs incurvés de telle manière que le ou les centre(s) de courbure (A, A1, A2) de la surface extérieure (12) incurvée avec une forme convexe est ou sont espacé(s) du ou des centre(s) de courbure (B, B1, B2) de la surface intérieure incurvée avec une forme concave dans une direction s'étendant perpendiculairement à l'axe longitudinal (X-X),
**caractérisé en ce que** le ou les centre(s) de courbure (A, A1, A2) de la surface extérieure (12) incurvée avec une forme convexe est ou sont espacé(s) du ou des centre(s) de courbure (B, B1, B2) de la surface intérieure (16) incurvée avec une forme concave de telle manière qu'il se produise un contact entre leurs surfaces de contact (11) dans la région médiane, vu dans la direction du vissage, de la surface extérieure (12) et de la surface intérieure (16), les régions marginales de la surface extérieure (12) et de la surface intérieure (16) ne subissant aucune sollicitation ou subissant seulement une faible sollicitation.

2. Dispositif de fixation selon la revendication 1,
**caractérisé en ce que** l'élément de vissage (1) est réalisée sus la forme d'une vis composée d'une tête de vis (4) et d'une tige filetée (6) qui y fait suite et qui est munie d'une pointe de vis libre (8), la surface extérieure (12) incurvée avec une forme convexe étant disposée sur le côté de la tête de vis (4) qui est dirigé vers la tige filetée (6).

3. Dispositif de fixation selon la revendication 1,
**caractérisé en ce que** l'élément de vissage (1) est réalisé sous la forme d'un écrou et la surface intérieure (16) est disposée sur la pièce (2) avec une tige filetée (6) qui s'étend en direction de l'écrou.

4. Dispositif de fixation selon une des revendications 1 à 3,
**caractérisé en ce que** les segments d'arc qui décrivent les surfaces de contact (11) dans une coupe axiale sont constituées par des segments de cercles.

5. Dispositif de fixation selon la revendication 4,
**caractérisé en ce que** les segments de cercles de la surface intérieure (16) incurvée avec une forme concave présentent un centre de courbure commun (B) et les segments de cercles de la surface extérieure (12) incurvée avec une forme convexe présentent des centres de courbure (A1, A2) espacés l'un de l'autre dans la direction s'étendant perpendiculairement à l'axe longitudinal (X-X), le rayon appartenant aux segments de cercles de la surface intérieure (16) incurvée avec une forme concave étant plus long que les rayons appartenant aux segments de cercles de la surface extérieure (12) incurvée avec une forme convexe.

6. Dispositif de fixation selon la revendication 4,
**caractérisé en ce que** les segments de cercles de la surface extérieure (12) incurvée avec une forme convexe présentent un centre de courbure commun (A) et les segments de cercles de la surface intérieure (16) incurvée avec une forme concave présentent des centres de courbure (B1, B2) espacés l'un de l'autre dans la direction s'étendant perpendiculairement à l'axe longitudinal (X-X), le rayon appartenant aux segments de cercles de la surface extérieure (12) incurvée avec une forme convexe étant plus court que les rayons appartenant aux segments de cercles de la surface intérieure (16) incurvée avec une forme concave.

7. Dispositif de fixation selon la revendication 4,
**caractérisé en ce que** les segments de cercles de la surface intérieure (16) incurvée avec une forme concave et les segments de cercles de la surface extérieure (12) incurvée avec une forme convexe présentent des centres de courbure (A1, A2 ; B1, B2) espacés les uns des autres dans la direction s'étendant perpendiculairement à l'axe longitudinal (X-X), les centres de courbure (A1, A2 ; B1, B2) étant espacés l'un de l'autre dans la direction s'étendant perpendiculairement à l'axe longitudinal (X-X) et les rayons appartenant aux segments de cercles de la surface intérieure (16) étant plus longs que les rayons appartenant aux segments de cercles de la surface extérieure (12).

8. Dispositif de fixation selon une des revendications 1 à 3,
**caractérisé en ce que** les segments d'arcs qui décrivent les surfaces de contact (11) sont constitués par des segments d'ellipses.

9. Elément de vissage (1) comprenant une prise d'application de force (10) pour un outil de rotation et une surface de contact (11) pointant dans la direction de vissage (E) de l'élément de vissage et constituée par une surface extérieure incurvée avec une forme convexe, qui est destinée à entrer en contact avec une surface intérieure (16) incurvée avec une forme concave d'une pièce, la surface extérieure de l'élément de vissage (1) et la surface intérieure (16) de la pièce (2) étant disposées coaxialement à un axe longitudinal (X-X) commun s'étendant à travers la pièce (2) et l'élément de vissage (1), la surface de contact (11) étant décrite, dans une coupe axiale de l'élément de vissage (1), par des segments d'arcs incurvés dont les centres de courbure (A1, A2) sont espacés de l'axe longitudinal,
**caractérisé en ce que** les centres de courbure (A1, A2) de la surface extérieure (12) incurvée avec une forme convexe sont espacés du ou des centre(s) de courbure (B, B1, B2) des surfaces intérieures (16) incurvées avec une forme concave de telle manière qu'il se produise un contact de leurs surfaces de contact (11) dans la région médiane, vu dans la direction du vissage, de la surface extérieure (12) et de la surface intérieure (16), les régions marginales de la surface extérieure (12) et de la surface intérieure (16) ne subissant aucune sollicitation ou subissant seulement une faible sollicitation.

10. Elément de vissage selon la revendication 9,
**caractérisé par** une réalisation sous la forme d'une vis, composée d'une tête de vis (4) et d'une tige filetée (6) qui y fait suite et qui est munie d'une pointe de vis (8) libre, la surface extérieure (12) incurvée avec une forme convexe étant disposée sur le côté de la tête de vis (4) qui est dirigé vers la tige filetée (6).

11. Elément de vissage selon la revendication 9,
**caractérisé par** une réalisation sous la forme d'un écrou.

12. Elément de vissage selon une des revendications 9 à 11,
**caractérisé en ce que** les segments d'arcs de la surface extérieure (12) incurvée avec une forme convexe et de la surface intérieure (16) incurvée avec une forme concave de la pièce (2) qui décrivent les surfaces de contact (11) sont réalisés sous la forme de segments de cercles.

13. Elément de vissage selon la revendication 12,
**caractérisé en ce que** les segments de cercles de la surface intérieure (16) incurvée avec une forme concave présentent un centre de courbure commun (B) et les segments de cercles de la surface extérieure (12) incurvée avec une forme convexe présentent des centres de courbure (A1, A2) espacés l'un de l'autre dans la direction s'étendant perpendiculairement à l'axe longitudinal (X-X), le rayon appartenant aux segments de cercles de la surface intérieure (16) incurvée avec une forme concave étant plus long que les rayons appartenant aux segments de cercles de la surface extérieure (12) incurvée avec une forme convexe.

14. Elément de vissage selon la revendication 12,
**caractérisé en ce que** les segments de cercles de la surface extérieure (12) incurvée avec une forme convexe présentent un centre de courbure commun (A) et les segments de cercles de la surface intérieure (16) incurvée avec une forme concave présentent des centres de courbure (B1, B2) espacés l'un de l'autre dans la direction s'étendant perpendiculairement à l'axe longitudinal (X-X), le rayon appartenant aux segments de cercles de la surface extérieure (12) incurvée avec une forme convexe étant plus court que les rayons appartenant aux segments de cercles de la surface intérieure (16) incurvée avec une forme concave.

15. Elément de vissage selon la revendication 12,
**caractérisé en ce que** les segments de cercles de la surface intérieure (16) incurvée avec une forme concave et les segments de cercles de la surface extérieure (12) incurvée avec une forme convexe présentent des centres de courbure (A1, A2 ; B1, B2) espacés l'un de l'autre dans la direction s'étendant perpendiculairement à l'axe longitudinal (X-X), les centres de courbure (A1, A2 ; B1, B2) étant espacés l'un de l'autre dans la direction s'étendant perpendiculairement à l'axe longitudinal (X-X) et les rayons appartenant aux segments de cercles de la surface intérieure (16) étant plus longs que les rayons appartenant aux segments de cercles de la surface extérieure (12).

16. Elément de vissage selon une des revendications 9 à 11,
**caractérisé en ce que** les segments d'arcs de la surface extérieure (12) incurvée avec une forme convexe et de la surface intérieure (16) incurvée avec une forme concave de la pièce (2) qui décrivent les surfaces de contact (11) sont réalisés sous la forme d'arcs d'ellipses.

17. Elément de vissage selon une des revendications précédentes, en particulier selon la revendication 11,
**caractérisé par** une réalisation sous la forme d'un écrou pouvant être vissé sur une tige filetée (6), la tige filetée (6) étant disposée dans la surface intérieure (16) incurvée avec une forme concave.
